# EUROPÄISCHE PATENTSCHRIFT

(11) **EP 4 559 297 B1**
(45) Veröffentlichungstag und Bekanntmachung des Hinweises auf die Patenterteilung: **04.03.2026**
(21) Anmeldenummer: 24212548.2
(22) Anmeldetag: 13.11.2024
(51) Int. Cl.: A01B 63/11, A01B 73/00, A01B 73/04, A01C 7/20

(54) **GEZOGENE LANDWIRTSCHAFTLICHE ARBEITSMASCHINE UND VERFAHREN ZUR GEWICHTSVERLAGERUNG EINER LANDWIRTSCHAFTLICHEN ARBEITSMASCHINE**
TOWED AGRICULTURAL WORK MACHINE AND METHOD FOR WEIGHT SHIFTING AN AGRICULTURAL WORK MACHINE
MACHINE DE TRAVAIL AGRICOLE TRACTÉE ET PROCÉDÉ DE DÉPLACEMENT DU POIDS D'UNE MACHINE DE TRAVAIL AGRICOLE

(30) Priorität: 24.11.2023 DE 102023132787
(43) Veröffentlichungstag der Anmeldung: 28.05.2025
(73) Patentinhaber: Horsch Maschinen GmbH, 92421 Schwandorf (DE)
(72) Erfinder: Horsch, Philipp, 92421 Schwandorf (DE); Laumer, Maximilian, 92421 Schwandorf (DE)
(74) Vertreter: v. Bezold & Partner Patentanwälte - PartG mbB

(56) Entgegenhaltungen:
- WO-A1-2021/080493
- WO-A1-2023/093924
- WO-A1-2023/093925
- DE-A1- 102021 104 383
- US-A1- 2017 318 733
- US-A1- 2017 318 734

## Beschreibung

Die Erfindung betrifft eine gezogene landwirtschaftliche Arbeitsmaschine zur Bodenbearbeitung und/oder zur Ausbringung von landwirtschaftlichem Verteilgut. Die Erfindung betrifft zudem ein Verfahren zur Gewichtsverlagerung an einer gezogenen landwirtschaftlichen Arbeitsmaschine.

Zum Stand der Technik kann zunächst auf die WO 2023/093924 A1 verwiesen werden, die eine landwirtschaftliche Bodenbearbeitungsvorrichtung offenbart, die einen zentralen Rahmen mit einem Kupplungsmechanismus umfasst, der zur Befestigung an einer Zugvorrichtung mit einer Halterung ausgelegt ist, sowie Flügel, die drehbar am zentralen Rahmen angebracht sind, Abschnitten von Arbeitseinheiten, die drehbar an den Flügeln angebracht sind, wobei die Abschnitte aus mindestens einer Reihe von Arbeitseinheiten bestehen, mindestens einem Fahrrad, das durch einen Drehverriegelungsmechanismus am Flügel angebracht ist, und Stützstangen , die drehbar an den Flügeln angebracht und mit der Halterung verbunden sind. Die Laufräder sind drehbar an den Flügeln an deren Endteil angebracht. Die Laufräder gewährleisten die Fortbewegung des landwirtschaftlichen Geräts, das über den Kupplungsmechanismus mit der Zugvorrichtung verbunden ist. Die Fahrräder sind mittels eines Drehverriegelungsmechanismus an den Flügeln befestigt, der eine Drehbewegung der Fahrräder relativ zum landwirtschaftlichen Gerät ermöglicht, wobei sich der Winkel zwischen der durch den Mittelpunkt der Fahrräder verlaufenden Achse und der Mittelachse des landwirtschaftlichen Geräts während dieser Drehbewegung ändert. Ferner kann zum allgemeinen Stand der Technik noch verwiesen werden auf die WO 2023/093925 A1, die US 2017/318734 A1 und die US 2017/318733 A1.

In der Landwirtschaft werden zur Bodenbearbeitung und/oder zur Ausbringung, d.h. zur Aussaat von landwirtschaftlichen Verteilgütern landwirtschaftliche Arbeitsmaschinen eingesetzt, wobei diese häufig als mittels einer Zugmaschine gezogene Arbeitsmaschinen ausgeführt sind. Bei der Entwicklung und beim Bau derartiger Arbeitsmaschinen müssen zum einen ackerbauliche Aspekte bei einer Feldarbeit und zum anderen rechtliche Aspekte beim Straßentransport berücksichtigt werden. So ist in der Regel für die Feldarbeit auf einer Ackerfläche, zur Bodenschonung und zur gleichmäßigen Bearbeitung, eine möglichst gleichmäßige Gewichtsverteilung auf alle Bodenbearbeitungs- und/oder Saatwerkzeuge oder eine möglichst große Gewichtsentlastung der Bodenbearbeitungs- und/oder Saatwerkzeuge wünschenswert. Für einen Straßentransport hingegen muss die Gewichtsverteilung so ausgelegt sein, dass Stützlasten und Achslasten gesetzlich vorgeschriebene maximal Werte nicht überschreiten und minimale Werte nicht unterschreiten. Wobei sich die Schwierigkeiten, um diese Werte einzuhalten mit zunehmenden Arbeitsbreiten der Arbeitsmaschinen entsprechend vergrößern.

Eine landwirtschaftliche Arbeitsmaschine mit einer optimierten Gewichtsverlagerung wurde bspw. durch die DE 10 2021 104 383 A1 bekannt. Zur Verbesserung der Gewichtsverteilung der Arbeitsmaschine sowohl bei einer Feldarbeit als auch bei einem Straßentransport ist vorgesehen, dass eine Relativposition von zumindest einem Laufrad eines Fahrwerks der Arbeitsmaschine gegenüber einer Rahmenkonstruktion in Bezug auf die Fahrtrichtung veränderbar ist.

Nachteilig hierbei ist, dass eine Veränderung der Relativposition einen aufwendigen Schwenkmechanismus erfordert. Nachteilig ist zudem, dass durch die bekannte Gewichtsverlagerung lediglich eine Verlagerung der jeweiligen Lasten innerhalb der Arbeitsmaschine möglich ist, wodurch dieses System nur bei Arbeitsmaschinen mit einem beschränkten Gesamtgewicht eingesetzt werden kann, insbesondere nur bei einer Arbeitsmaschine mit einer maximalen Achslast von 10 Tonnen und einer maximalen Stützlast von 3 Tonnen eingesetzt werden kann, wodurch wiederum die maximale Arbeitsbreite der Arbeitsmaschine begrenzt ist.

Aufgabe der Erfindung ist es somit, die beschriebenen Nachteile des Standes der Technik zu beseitigen. Insbesondere soll eine Arbeitsmaschine mit einem großen Gesamtgewicht geschaffen werden, bei welcher sowohl bei einer Straßenfahrt als auch bei einer Feldarbeit eine gewünschte Gewichtsverteilung erreicht wird.

Diese Aufgaben werden gelöst durch eine landwirtschaftliche Arbeitsmaschine zur Bodenbearbeitung und/oder zur Ausbringung von landwirtschaftlichem Verteilgut mit den Merkmalen des unabhängigen Anspruch 1, sowie durch ein Verfahren zur Gewichtsverlagerung an einer landwirtschaftlichen Arbeitsmaschine mit den Merkmalen des Verfahrensanspruch 13. Vorteilhafte Ausführungsformen und Weiterbildungen der Erfindung sind in den Ansprüchen und der folgenden Beschreibung unter teilweiser Bezugnahme auf die Figuren offenbart.

Gemäß einem ersten Aspekt der Erfindung wird eine gezogene landwirtschaftliche Arbeitsmaschine zur Bodenbearbeitung und/oder zur Ausbringung von landwirtschaftlichem Verteilgut (z.B. Saatgut, Dünger und/oder dergl.) bereitgestellt.

Die Arbeitsmaschine umfasst eine Rahmenkonstruktion, welche an einer Frontseite eine Zugvorrichtung und an einer Heckseite ein Fahrwerk aufweist, wobei die Zugvorrichtung zur Aufnahme einer Betriebszugkraft einer Zugmaschine in Fahrtrichtung und/oder zur Übertragung einer Betriebsstützlast der Arbeitsmaschine auf die Zugmaschine konfiguriert ist, wobei das Fahrwerk zumindest zwei Abstützreinrichtungen aufweist, die zur Übertragung einer Betriebsradlast der Arbeitsmaschine auf den Boden vorgesehen sind, wobei an der Rahmenkonstruktion an der Heckseite, vorzugsweise in Fahrtrichtung hinter dem Fahrwerk, eine Kupplungseinrichtung angeordnet ist, an welcher eine, einen Trägerrahmen aufweisende Bodenbearbeitungs- und/oder Säeinrichtung aufgenommen ist.

Zur Schaffung einer Arbeitsmaschine mit einem großen Gesamtgewicht, bei welcher sowohl bei einer Straßenfahrt als auch bei einer Feldarbeit eine gewünschte Gewichtsverteilung erreicht wird, sieht die erfindungsgemäße Arbeitsmaschine eine an der Rückseite der Bodenbearbeitungs- und/oder Säeinrichtung angeordnete Stützradeinrichtung vor.

Infolge der erfindungsgemäßen zusätzlichen Stützradeinrichtung kann somit bspw. die Betriebsstützlast und/oder die Betriebsradlast der Arbeitsmaschine sowohl bei einer Straßenfahrt (z.B. Transportposition) als auch bei einer Feldarbeit (z.B. Arbeitsposition) in gewünschter Weise verändert und auf jeweils geforderte und/oder zulässige minimal Lasten und maximal Lasten angepasst werden.

Die erfindungsgemäße Arbeitsmaschine zeichnet sich somit insbesondere dadurch aus, dass das Gesamtgewicht der Arbeitsmaschine anteilig in eine Betriebsstützlast, eine Betriebsradlast sowie eine, durch die Stützradeinrichtung aufgenommene Stützradlast, auf den Boden übertragbar ist.

Insbesondere kann durch die erfindungsgemäße Anordnung des Fahrwerks und der Stützradeinrichtung eine ausreichende Betriebsstützkraft erreicht werden, ohne hierfür eine Frontseite der Rahmenkonstruktion und/oder die Zugvorrichtung mit zusätzlichen Gewichten beschweren zu müssen.

Die Betriebszugkraft ist bevorzugt durch eine Zugkraft definiert, die eine Zugmaschine zur Bewegung der Arbeitsmaschine auf diese überträgt.

Die Stützradeinrichtung ist in aufrechter Richtung zwischen einer Bodenkontaktposition und einer nicht Bodenkontaktposition verschwenkbar am Trägerrahmen gelagert, wobei das Verschwenken mittels einer, vorzugsweise mittels einer Steuereinrichtung steuer- und/oder regelbaren, Betätigungseinrichtung erfolgt. Bevorzugt erfolgt das Verschwenken der Stützradeinrichtung mittels der Betätigungseinrichtung in Abhängigkeit, ob die Arbeitsmaschine eine Feldarbeit ausführt oder in eine Transportposition für eine Straßenfahrt überführt ist, respektive überführt werden soll. Die Betätigungseinrichtung kann mittels einer Steuereinrichtung automatisiert betätigt werden und/oder durch eine Bedienperson manuell mittels der Steuereinrichtung ferngesteuert werden. Durch das Verschwenken der Stützradeinrichtung mittels der Betätigungseinrichtung kann somit die Stützradeinrichtung gezielt in eine gewünschte Position überführt werden, sowie die die Übertragung des Gesamtgewichts der Arbeitsmaschine auf den Boden beeinflusst werden.

Zur Überführung der Bodenbearbeitungs- und/oder Säeinrichtung in eine Transportposition oder in eine Arbeitsposition kann gemäß einer Weiterbildung der Erfindung kann vorgesehen sein, dass der Kupplungseinrichtung eine, vorzugsweise mittels einer Steuereinrichtung steuer- und/oder regelbare, Aktoreinrichtung zugeordnet ist, wobei die Aktoreinrichtung zur Veränderung der Höhenlage und/oder der Winkellage der Bodenbearbeitungs- und/oder Säeinrichtung relativ zur Rahmenkonstruktion konfiguriert ist.

Zur Schaffung einer Arbeitsmaschine welche mit verschiedensten Bodenbearbeitungs- und/oder Säeinrichtungen gekoppelt werden kann, ist die Kupplungseinrichtung vorzugsweise als eine Dreipunktanhängung oder als eine Vierpunktanhängung (z.B. Parallelogramm) ausgebildet. Zudem kann die Aktoreinrichtung durch zumindest einen, insbesondere hydraulisch mittels einer Steuereinrichtung betätigten, Oberlenkerzylinder gebildet sein und/oder durch zumindest einen (insbesondere jedoch zwei), insbesondere hydraulisch mittels einer Steuereinrichtung betätigten Unterlenkerzylinder gebildet sein. Bei einer Dreipunktanhängung kann der Oberlenkerzylinder bspw. einen Oberlenker bilden, zudem kann der Unterlenkerzylinder mit zumindest einer, einen Unterlenker bildenden Schwinge gekoppelt sein und/oder diese bilden. Bei einer Vierpunktanhängung kann der Oberlenker bspw. mit den oberen Schwingen eines Parallelogramms gekoppelt sein oder diese bilden., zudem kann der Unterlenkerzylinder bspw. mit den unteren Schwingen eines Parallelogramms gekoppelt sein oder diese bilden.

Die Betätigungseinrichtung ist vorzugsweise eingerichtet, in der Bodenkontaktposition eine Vorspannkraft auf die Stützradeinrichtung auszuüben, vorzugsweise derartig, dass eine Entlastung der Kupplungseinrichtung erfolgt und/oder eine Reduzierung der Betriebsradlast des Fahrwerks erfolgt und/oder eine Erhöhung der Betriebsstützlast erfolgt. Wobei dies vorzugsweise sowohl in der Arbeitsposition als auch in der Transportposition entsprechend durchgeführt werden kann. Bevorzugt kann somit die jeweilige Last gezielt erhöht oder verringert werden.

Um eine ausreichende Vorspannkraft auf die Stützradeinrichtung zu erreichen ist es gemäß einer Weiterbildung der Erfindung möglich, dass die Steuereinrichtung durch ein Elektrohydraulisches-System gebildet ist und die Betätigungseinrichtung durch zumindest einen hydraulisch betätigten Zylinder, der Bestandteil des Elektrohydraulischen-System ist, gebildet ist. Das Elektrohydraulische-System kann insbesondere eine Begrenzungseinrichtung umfassen, die eingerichtet ist, die Vorspannkraft der Stützradeinrichtung zu begrenzen. Die Begrenzungseinrichtung kann bspw. gebildet sein durch zumindest einen Federspeicher und/oder ein Sperrventil und/oder ein Druckbegrenzungsventil und/oder ein Druckregelventil und eingerichtet sein, die Vorspannkraft der Stützradeinrichtung zu begrenzen.

Alternativ oder ergänzend kann die Begrenzung der Vorspannkraft der Stützradeinrichtung mittels einer mechanischen Schraubenfeder erfolgen.

Zur Schaffung einer, eine große Arbeitsbreite aufweisenden Arbeitsmaschine kann vorgesehen sein, dass der Trägerrahmen durch ein Mittelteil und zwei gegenüber dem Mittelteil um horizontale Längsachsen mittels einer, vorzugsweise mittels einer Steuereinrichtung steuer- und/oder regelbaren, Stelleinrichtung schwenkbare Seitenteile gebildet ist, wobei insbesondere an den Seitenteilen und/oder an dem Mittelteil die Bodenbearbeitungs- und/oder Säeinrichtung gelagert ist. Die Stelleinrichtung kann bevorzugt durch einen oder mehrere hydraulisch betätigte Zylinder gebildet sein.

Die Steuereinrichtung ist gemäß einer bevorzugten Ausführungsvariante zur derartigen Steuerung und/oder Regelung der Betätigungseinrichtung und/oder der Stelleinrichtung eingerichtet, dass in der Arbeitsposition der Arbeitsmaschine die Stützradeinrichtung in eine nicht Bodenkontaktposition verschwenkt ist und die Seitenteile in eine zumindest weitgehend waagerecht zum Mittelteil verschwenkte Position verschwenkt sind. Bevorzugt wird durch die senkrechte Lage der Seitenteile eine Bodenkontaktposition der Bodenbearbeitungs- und/oder Säeinrichtung erreicht. Somit wird insbesondere erreicht, dass die jeweiligen Bodenbearbeitungs- und/oder Säeinrichtungen eine ausreichende Last aufweisen um somit bspw. eine Bodenfläche ausreichend rückverfestigen zu können.

Alternativ oder ergänzend ist die Steuereinrichtung zur derartigen Steuerung und/oder Regelung der Betätigungseinrichtung und/oder der Stelleinrichtung eingerichtet, dass in der Transportposition der Arbeitsmaschine, die Stützradeinrichtung in eine Bodenkontaktposition verschwenkt ist und die Seitenteile in eine zumindest weitgehend senkrecht zum Mittelteil verschwenkte Position verschwenkt sind. Somit wird insbesondere erreicht, dass die Betriebsradlast der Arbeitsmaschine, durch die durch das Stützrad aufgenommene Last, eine zulässige maximale Betriebsradlast von bspw. 10 Tonnen nicht überschreitet.

Um die auf die jeweiligen Bodenbearbeitungs- und/oder Säeinrichtungen wirkenden Lasten während der Arbeitsposition gezielt zu verringern, ist es gemäß einer Weiterbildung der Erfindung denkbar, dass die Steuereinrichtung zur derartigen Steuerung und/oder Regelung der Betätigungseinrichtung und/oder der Stelleinrichtung eingerichtet ist, dass in der Arbeitsposition der Arbeitsmaschine, die Stützradeinrichtung in eine Bodenkontaktposition verschwenkt ist und die Seitenteile in eine zumindest weitgehend waagerecht zum Mittelteil verschwenkte Position verschwenkt sind. Wobei bevorzugt vorgesehen sein kann, dass eine Vorspannkraft der Stützradeinrichtung entsprechend steuer- und/oder regelbar ist und insbesondere entsprechend auf ein gewünschtes Niveau einstellbar ist.

Eine zumindest weitgehend senkrechte oder waagerechte Lage der Seitenteile gegenüber dem Mitteilteil ist vorzugsweise jeweils durch eine Lage der Bodenbearbeitungs- und/oder Säeinrichtung gegenüber dem Boden, d.h. gegenüber der Bodenoberfläche definiert.

Eine kompakte Bauweise der Arbeitsmaschine kann vorsehen, dass in der Arbeitsposition die Stützradeinrichtung eine Lage oberhalb des Mittelteils, insbesondere oberhalb der Bodenbearbeitungs- und/oder Säeinrichtung, aufweist, und dass in der Transportstellung die Stützradeinrichtung in Bezug auf die Fahrtrichtung eine Lage hinter dem Mittelteil, insbesondere hinter der Bodenbearbeitungs- und/oder Säeinrichtung und/oder zwischen den senkrecht zum Mittelteil verschwenkten Seitenteilen aufweist. Bevorzugt ist es möglich, dass in der Arbeitsposition die Stützradeinrichtung in Fahrtrichtung nach hinten nicht über die Bodenbearbeitungs- und/oder Säeinrichtung hinausragt.

Zur Schaffung einer Arbeitsmaschine welche den gesetzlichen Anforderungen entspricht kann gemäß einer bevorzugten Weiterbildung der Erfindung vorgesehen sein, dass die Steuereinrichtung eingerichtet ist, die Betätigungseinrichtung und die Aktoreinrichtung in einer aufeinander abgestimmten Weise zu steuern und/oder zu regeln, vorzugsweise derartig, dass die Betriebsradlast des Fahrwerks einen maximal zulässigen Wert nicht überschreitet und/oder dass die Betriebsstützlast einen minimal erforderlichen Wert nicht unterschreitet.

Zur Vermeidung von unkontrollierten Bewegungen der Stützradeinrichtung oder der Bodenbearbeitungs- und/oder Säeinrichtung ist es möglich, dass der Betätigungseinrichtung und/oder der Aktoreinrichtung, vorzugsweis in der Transportposition, Hubbegrenzungselemente zugeordnet sind. Insbesondere können die Hubbegrenzungselemente durch mechanische Anschläge und/oder Einlegeelemente oder dergl. gebildet sein.

Bevorzugt ist die Stützradeinrichtung durch einen Schwenkrahmen und eine Laufradeinrichtung gebildet, wobei die Laufradeinrichtung vorzugsweise durch ein Einzelrad oder eine Zwillingsradanordnung und/oder eine Tandemanordnung gebildet ist und/oder wobei die Laufradeinrichtung vorzugsweise um eine aufrecht orientierte Achse schwenkbar am Schwenkrahmen gelagert ist.

Es sei darauf hingewiesen, dass gemäß der vorliegenden Beschreibung, die Definition Rad auch Raupenlaufwerke oder dergl. umfasst.

Um eine Arbeitsmaschine zur Verfügung zu stellen, mittels welcher in einer Überfahrt bspw. eine Bodenbearbeitung und eine Verteilung von landwirtschaftlichem Verteilgut ermöglicht ist, kann gemäß einer bevorzugten Ausführungsvariante vorgesehen sein, dass der Rahmenkonstruktion ein Vorratsbehälter zugeordnet ist, der zum Mitführen und Bereitstellen von landwirtschaftlichem Verteilgut für die Säeinrichtung eingerichtet ist.

Um die Betriebsradlast und/oder die Betriebsstützlast noch gezielter anpassen zu können, ist es gemäß einer Weiterbildung der Erfindung denkbar, dass eine Relativposition des Fahrwerks, insbesondere eine Relativposition von zumindest einer Abstützeinrichtung des Fahrwerks, gegenüber dem Maschinenrahmen in Bezug auf die Fahrtrichtung veränderbar ist. Bevorzugt ist es möglich, dass ein Verändern derartig erfolgt, dass die zumindest eine Abstützeinrichtung, gegenüber der Fahrtrichtung, eine vordere Relativposition und eine hintere Relativposition einnehmen kann.

Im Kontext der Erfindung handelt es sich bei der zu den jeweiligen Ausführungsbeispielen genannten Steuereinrichtung um die gleiche Steuereinrichtung, insbesondere um eine gemeinsame, zentrale Steuereinrichtung der landwirtschaftlichen Arbeitsmaschine. Die Steuereinrichtung weist bspw. zumindest eine Rechnereinheit, einen Bordcomputer und/oder dergl. auf und umfasst zudem einen Steuer- und/oder Regelkreis, insbesondere einen hydraulischen und/oder pneumatischen und/oder elektrischen Steuer- und/oder Regelkreis, wobei der Steuer- und/oder Regelkreis zweckmäßig zur hydraulischen und/oder pneumatischen und/oder elektrischen Signal- und/oder Befehlsübertragung ausgebildet ist. Welche Signal- und/oder Befehlsübertragung auch drahtlos (z.B. mittels WLAN) erfolgen kann. Insbesondere umfasst die Steuereinrichtung die Gesamtheit der Bauteile zur hydraulischen und/oder pneumatischen und/oder elektrischen Signal- und/oder Befehls- und/oder Bewegungsübertragung.

Es sei noch darauf hingewiesen, dass die Begriffe "Steuern" und "Regeln" und "Steuereinrichtung" sich auf elektronische und/oder pneumatische und/oder hydraulische Steuerungen oder Regelungen beziehen können, die je nach Ausbildung Steuerungsaufgaben und/oder Regelungsaufgaben übernehmen können. Auch wenn hierin der Begriff "Steuern" verwendet wird, kann damit gleichsam zweckmäßig auch "Regeln" umfasst sein. Ebenso kann bei Verwendung des Begriffs "Regeln" gleichsam auch ein "Steuern" damit umfasst sein.

Im Kontext der Erfindung umfasst die Definition Heckseite insbesondere einen hinteren Abschnitt der Rahmenkonstruktion. Ebenso umfasst die Definition Rückseite einen hinteren Abschnitt der Bodenbearbeitungs- und/oder Säeinrichtung.

Die Erfindung betrifft zudem ein Verfahren zur Gewichtsverlagerung an einer gezogenen landwirtschaftlichen Arbeitsmaschine zur Bodenbearbeitung und/oder zur Ausbringung von landwirtschaftlichem Verteilgut, mit einer Rahmenkonstruktion, welche an einer Frontseite eine Zugvorrichtung und an einer Heckseite ein Fahrwerk aufweist, wobei an der Rahmenkonstruktion an der Heckseite, vorzugsweise in Fahrtrichtung hinter dem Fahrwerk, eine Kupplungseinrichtung angeordnet ist, an welcher eine, einen Trägerrahmen aufweisende, Bodenbearbeitungs- und/oder Säeinrichtung aufgenommen ist.

Das Verfahren umfasst eine Aufnahme einer Betriebszugkraft einer Zugmaschine in Fahrtrichtung und/oder eine Übertragung einer Betriebsstützlast der Arbeitsmaschine auf die Zugmaschine mittels der Zugvorrichtung. Zudem umfasst das Verfahren eine Übertragung einer Betriebsradlast der Arbeitsmaschine auf den Boden mittels zumindest zwei, das Fahrwerk bildenden, Abstützeinrichtungen.

Das Verfahren zeichnet sich aus durch eine Entlastung der Kupplungseinrichtung und/oder eine Reduzierung der Betriebsradlast des Fahrwerks und/oder eine Erhöhung der Betriebsstützlast der Zugvorrichtung durch eine Erzeugung einer Vorspannkraft auf eine, an der Rückseite der Bodenbearbeitungs- und/oder Säeinrichtung angeordnete, Stützradeinrichtung mittels einer Betätigungseinrichtung.

Weitere Einzelheiten und Vorteile der Erfindung werden im Folgenden unter Bezug auf die beigefügten Zeichnungen beschrieben. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen:
- Figur 1: eine perspektive Ansicht einer Ausführungsvariante einer gezogenen landwirtschaftlichen Arbeitsmaschine in einer Arbeitsposition,
- Figur 2A: eine Seitenansicht der Arbeitsmaschine gemäß Figur 1,
- Figur 2B: eine Seitenansicht der Arbeitsmaschine gemäß der Figur 2A mit hervorgehobener Darstellung der Betätigungseinrichtung,
- Figur 3: eine perspektive Ansicht der Arbeitsmaschine gemäß der Figur 1 in einer Transportposition,
- Figur 4: eine Seitenansicht der Arbeitsmaschine gemäß der Figur 3,
- Figur 5: eine Ansicht von hinten der Arbeitsmaschine gemäß der Figur 3

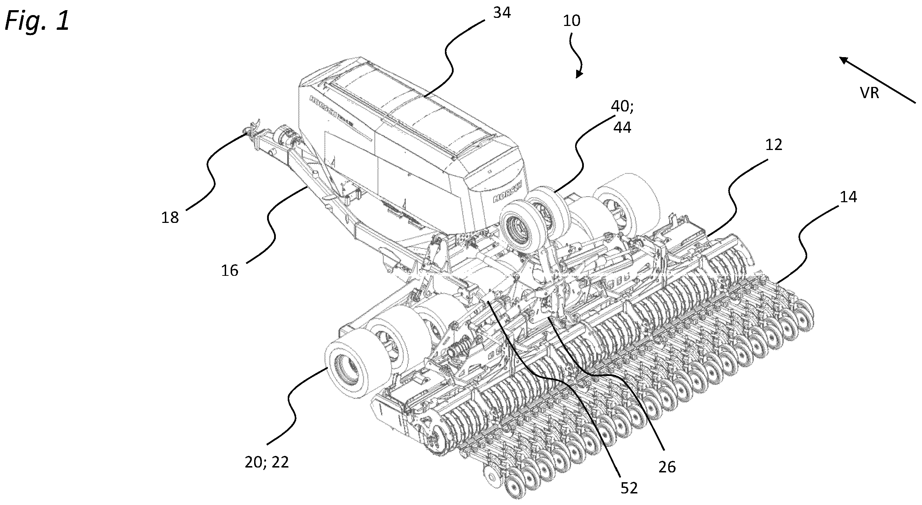

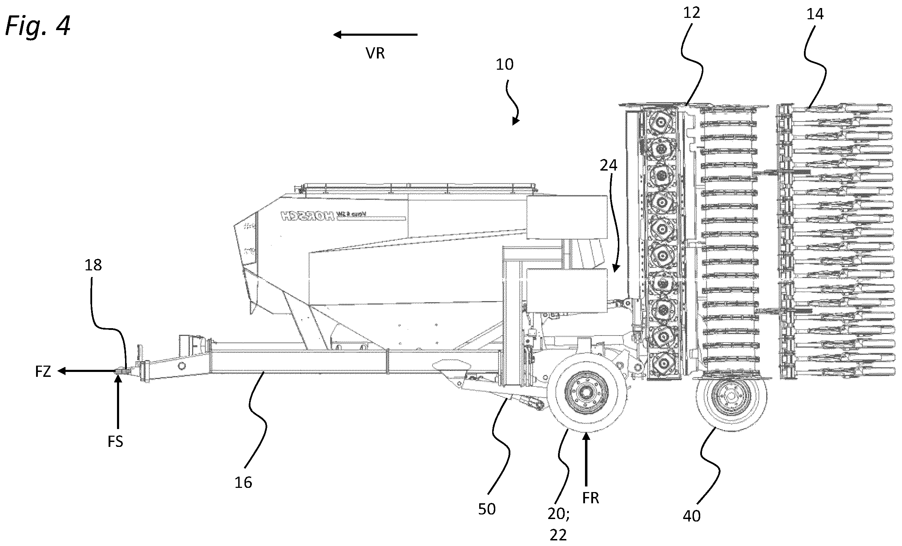

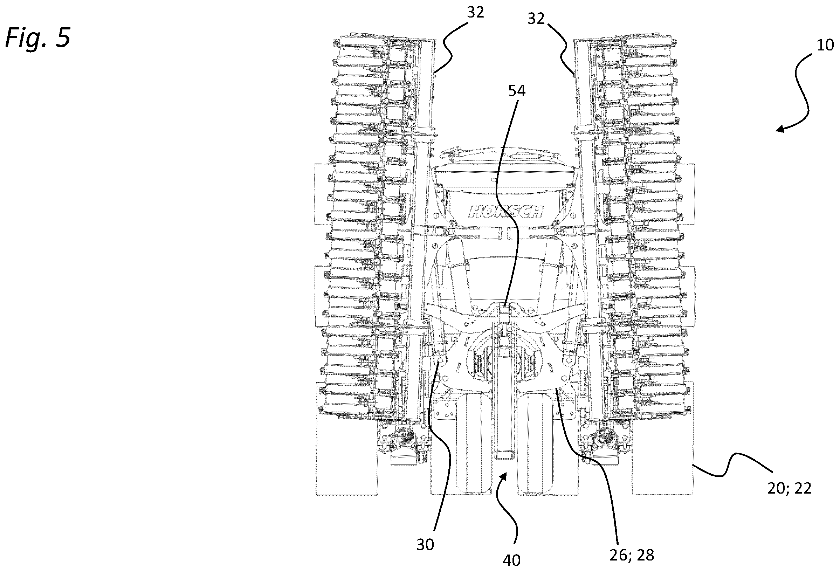

Die in den Figuren 1 bis 5 gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

Die Figuren 1 bis 5 zeigen unterschiedliche Ansichten eines Ausführungsbeispiels einer gezogenen landwirtschaftlichen Arbeitsmaschine 10 die unter gemeinsamer Bezugnahme auf die Figuren 1 bis 5 beschrieben werden.

Insbesondere ist mittels der landwirtschaftlichen Arbeitsmaschine 10 ein Verfahren gemäß der vorliegenden Beschreibung ausführbar.

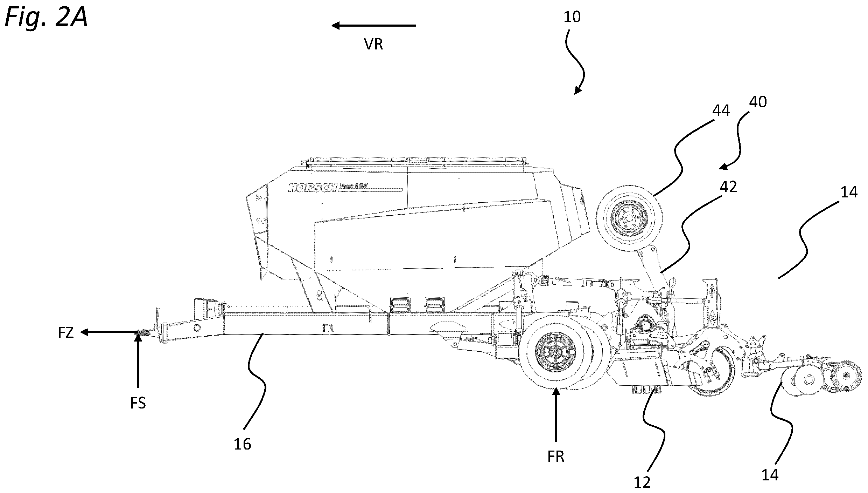

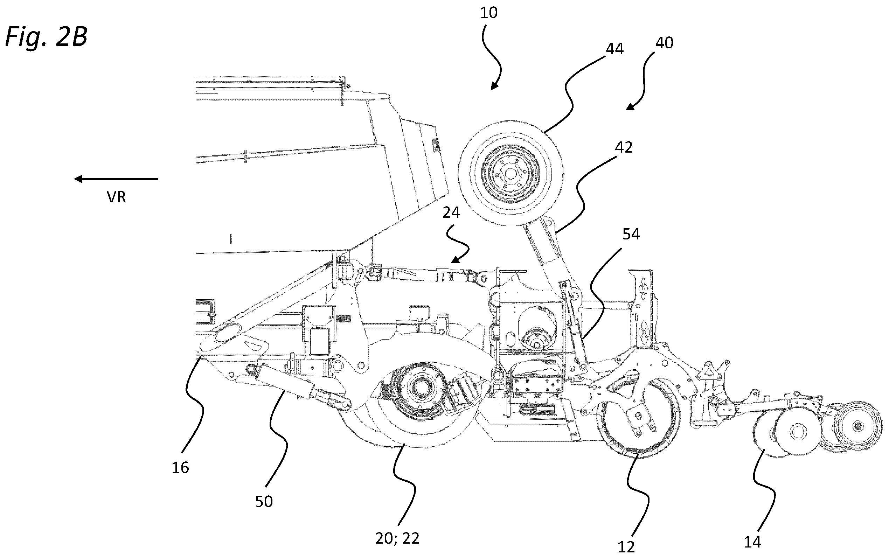

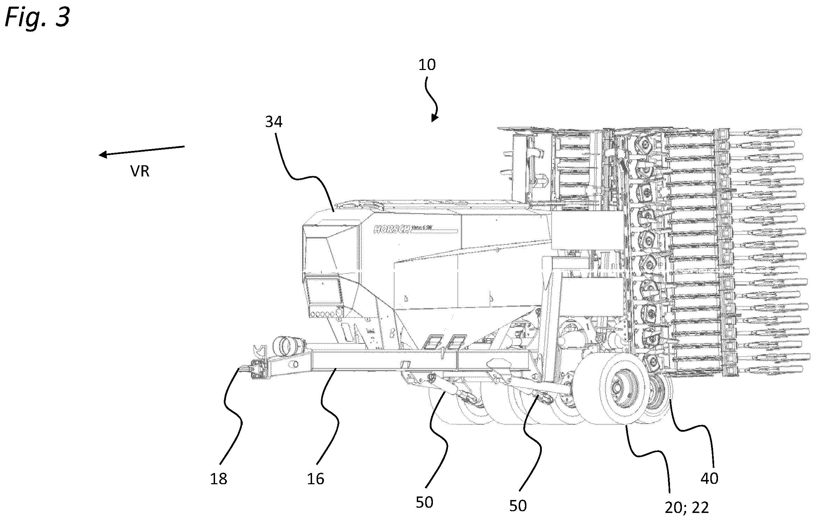

Gemäß der Figuren 1 und 2 ist die Arbeitsmaschine in einer ausgeklappten Arbeitsposition gezeigt sowie gemäß der Figuren 3 bis 5 in einer zusammengeklappten Transportposition.

Die Arbeitsmaschine 10 ist als gezogene landwirtschaftliche Arbeitsmaschine 10 zur Bodenbearbeitung und/oder zur Ausbringung von landwirtschaftlichem Verteilgut (z.B. Saatgut, Dünger oder dergl.) ausgeführt. An der Arbeitsmaschine 10 ist zur Bodenbearbeitung eine als Kreiselegge ausgebildete Bodenbearbeitungseinrichtung 12, sowie zur Ausbringung von landwirtschaftlichem Verteilgut eine in Fahrtrichtung VR hinter der Bodenbearbeitungseinrichtung 12 angeordnete Säeinrichtung 14 vorgesehen. Die Arbeitsmaschine 10 kann somit zweckmäßig in einer Überfahrt sowohl eine Bodenbearbeitung als auch ein

Die Arbeitsmaschine 10 umfasst eine Rahmenkonstruktion 16, welche an einer Frontseite eine Zugvorrichtung (z.B. in Form einer Zugöse) 18 aufweist. Die Zugvorrichtung 18 ist zur Aufnahme einer Betriebszugkraft FZ einer, hier nicht dargestellten, Zugmaschine wie bspw. einem Traktor in Fahrtrichtung VR und/oder zur Übertragung einer Betriebsstützlast FS der Arbeitsmaschine 10 auf die Zugmaschine konfiguriert.

Zum Mitführen und Bereitstellen eines jeweiligen mittels der Bodenbearbeitungs- und/oder Säeinrichtung 12; 14, auszubringendem landwirtschaftlichem Verteilgut ist der Rahmenkonstruktion 16 ein Vorratsbehälter 34 zugeordnet. Der Vorratsbehälter 34 ist zweckmäßig über ein, hier nicht dargestelltes pneumatisches Leitungssystem, mit den Säscharen der Säeinrichtung 14 verbunden.

An der Heckseite, das heißt in einem hinteren Abschnitt, weist die Rahmenkonstruktion 16 ein Fahrwerk 20 auf, welches Fahrwerk 20 zumindest zwei Abstützeinrichtungen 22, gemäß dem vorliegenden Ausführungsbeispiel eine Vielzahl von Abstützeinrichtungen 22, in Form von Rädern, aufweist. Insbesondere sind die Abstützeinrichtungen 22 zur Übertragung einer Betriebsradlast BR der Arbeitsmaschine 10 auf den Boden vorgesehen.

Die Abstützeinrichtungen 22 sind in der Arbeitsposition über die gesamte Arbeitsbreite der Arbeitsmaschine 10 in gleichmäßigen Abständen den Bodenbearbeitungs- und Säeinheiten 12; 14 in Fahrtrichtung FR vorgelagert. Zudem sind diese neben der Übertragung einer Betriebsradlast FR, insbesondere zur optimierten Gewichtsverteilung und Rückverfestigung eines zuvor gelockerten Bodens einer Ackerfläche vorgesehen. In der Transportposition sind lediglich vier Abstützeinrichtungen 22 in Bodenkontakt und bilden entsprechend das Fahrwerk 20.

Zur Aufnahme, das heißt zur Koppelung, der Bodenbearbeitungs- und/oder Säeinrichtung 12; 14 an der Rahmenkonstruktion 16 ist an der Heckseite der Rahmenkonstruktion 16, vorzugsweise in Fahrtrichtung VR hinter dem Fahrwerk 20, eine Kupplungseinrichtung 24 angeordnet.

Die Kupplungseinrichtung 24 ist als eine Dreipunktanhängung ausgebildet und umfasst einen oberen Koppelpunkt, welcher durch einen Oberlenker gebildet ist, und zwei untere Schwingen. Alternativ zu einer Dreipunktanhängung könnte die Kupplungseinrichtung auch durch eine Vierpunktanhängung, bspw. in Form eines Parallelogramms gebildet sein.

Zur Veränderung der Höhenlage und/oder der Winkellage der Bodenbearbeitungs- und/oder Säeinrichtung 12; 14 relativ zur Rahmenkonstruktion 16 und dementsprechend zum Boden ist der Kupplungseinrichtung 24 eine, vorzugsweise mittels einer Steuereinrichtung steuer- und/oder regelbare, Aktoreinrichtung 50 zugeordnet. Die Aktoreinrichtung 50 ist zweckmäßig durch zumindest einen, gemäß dem Ausführungsbeispiel durch zwei, insbesondere hydraulisch betätigte, Unterlenkerzylinder gebildet, wobei die Unterlenkerzylinder jeweils mit einer, einen Unterlenker bildenden Schwinge gekoppelt sind. Alternativ oder ergänzend könnte die Aktoreinrichtung auch durch zumindest einen hydraulisch betätigten Oberlenkerzylinder gebildet sein.

Zur Aufnahme durch die Kupplungseinrichtung 24 weist die Bodenbearbeitungs- und/oder Säeinrichtung einen Trägerrahmen 26 auf. Der Trägerrahmen 26 umfasst ein Mittelteil 28 und zwei gegenüber dem Mittelteil 28 um horizontale Längsachsen 30 schwenkbare Seitenteile 32. Zum verschwenken der Seitenteile 32 ist jeweils eine, vorzugsweise mittels einer Steuereinrichtung steuer-und/oder regelbare, Stelleinrichtung 52 vorgesehen. Gemäß dem Ausführungsbeispiel sind die Bodenbearbeitungs- und/oder Säeinrichtung 12; 14 jeweils an den Seitenteilen 32 gelagert. Die Stelleinrichtung 52 umfasst gemäß dem Ausführungsbeispiel an der linken und der rechten Seite des Mittelteils 28 jeweils zwei zwischen dem Mittelteil 28 und je einem Seitenteil 32 angeordnete, insbesondere hydraulisch betätigte, Zylinder.

Zur Schaffung einer Arbeitsmaschine 10, bei welcher sowohl bei einer Straßenfahrt, d.h. bei einer Transportposition (vergl. Figur 3 bis 5), als auch bei einer Feldarbeit, d.h. bei einer Arbeitsposition (vergl. Figur 1 und 2), eine gewünschte Gewichtsverteilung erreicht wird, sieht die erfindungsgemäße Arbeitsmaschine 10 eine an der Rückseite, d.h. in einem hinteren Abschnitt, der Bodenbearbeitungs-und/oder Säeinrichtung 12; 14 angeordnete Stützradeinrichtung 40 vor.

Die Stützradeinrichtung 40 ist durch einen Schwenkrahmen 42 und eine Laufradeinrichtung 44 gebildet. Die Laufradeinrichtung 44 ist gemäß dem Ausführungsbeispiel durch zwei Räder in einer Zwillingsradanordnung gebildet. Zur besseren Beweglichkeit, d.h. zur besseren Anpassungsfähigkeit an Bodenunebenheiten der Laufradeinrichtung 44 wäre es zudem denkbar, dass diese um eine Aufrecht orientierte Achse schwenkbar am Schwenkrahmen 42 gelagert ist.

Die Stützradeinrichtung ist in aufrechter Richtung zwischen einer Bodenkontaktposition (vergl. Figur 3 bis 5) und einer nicht Bodenkontaktposition (vergl. Figur 1 und 2) verschwenkbar am Trägerrahmen 26, respektive am Mittelteil 28 des Trägerrahmen 26, gelagert. Das Verschwenken erfolgt vorzugsweise mittels einer, mittels einer Steuereinrichtung steuer- und/oder regelbaren, Betätigungseinrichtung 54.

Die Betätigungseinrichtung 54 ist vorzugsweise eingerichtet in der Bodenkontaktposition eine Vorspannkraft auf die Stützradeinrichtung 40 auszuüben, vorzugsweise derartig, dass eine Entlastung der Kupplungseinrichtung 24 erfolgt und/oder eine Reduzierung der Betriebsradlast FR des Fahrwerks 20 erfolgt und/oder eine Erhöhung der Betriebsstützlast FS erfolgt. Insbesondere kann durch eine Erhöhung der Betriebsstützlast FS gezielt die Traktion einer Zugmaschine erhöht werden, da durch eine Erhöhung der Betriebsstützlast FS wiederum die Achslast der Zugmaschine erhöht werden kann.

Die Steuerung und/oder Regelung der Betätigungseinrichtung 54 und/oder Stelleinrichtung 52 mittels der Steuereinrichtung erfolgt zweckmäßig derartig, dass in der Arbeitsposition der Arbeitsmaschine 10 die Stützradeinrichtung 40 in eine nicht Bodenkontaktposition verschwenkt ist und die Seitenteile 32 in eine zumindest weitgehend waagerecht zum Mittelteil 28 verschwenkte Position verschwenkt sind und dass in der Transportposition der Arbeitsmaschine 10 die Stützradeinrichtung 40 in eine Bodenkontaktposition verschwenkt ist und die Seitenteile 32 in eine zumindest weitgehend senkrecht zum Mittelteil 28 verschwenkte Position verschwenkt sind.

Das Verschwenken der Stützradeinrichtung 40 erfolgt zweckmäßig derartig, dass in der Arbeitsposition die Stützradeinrichtung 40 eine Lage oberhalb des Mittelteils 28, insbesondere oberhalb der Bodenbearbeitungs- und/oder Säeinrichtung 12; 14, aufweist, und in der Transportstellung die Stützradeinrichtung 40 eine Lage hinter dem Mittelteil 28, insbesondere hinter der Bodenbearbeitungs- und/oder Säeinrichtung 12; 14 aufweist. Bevorzugt ist vorgesehen, dass in der Arbeitsposition die Stützradeinrichtung 40 in Fahrtrichtung VR nach hinten nicht über die Bodenbearbeitungs- und/oder Säeinrichtung 12; 14 hinausragt.

Obwohl die Erfindung unter Bezugnahme auf bestimmte Ausführungsbeispiele beschrieben worden ist, ist es für einen Fachmann ersichtlich, dass verschiedene Änderungen ausgeführt werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste:

| | | | |
|---|---|---|---|
| 10 | Arbeitsmaschine | 40 | Stützradeinrichtung |
| 12 | Bodenbearbeitungseinrichtung | 42 | Schwenkrahmen |
| 14 | Säeinrichtung | 44 | Laufradeinrichtung |
| 16 | Rahmenkonstruktion | | |
| 18 | Zugvorrichtung | 50 | Aktoreinrichtung |
| 20 | Fahrwerk | 52 | Stelleinrichtung |
| 22 | Abstützeinrichtung | 54 | Betätigungseinrichtung |
| 24 | Kupplungseinrichtung | | |
| 26 | Trägerrahmen | VR | Fahrtrichtung |
| 28 | Mittelteil | | |
| 30 | Längsachse | FZ | Betriebszugkraft |
| 32 | Seitenteil | FS FR | Betriebsstützlast Betriebsradlast |

## Patentansprüche

1. Gezogene landwirtschaftliche Arbeitsmaschine (10) zur Bodenbearbeitung und/oder zur Ausbringung von landwirtschaftlichem Verteilgut, mit einer Rahmenkonstruktion (16), welche an einer Frontseite eine Zugvorrichtung (18) und an einer Heckseite ein Fahrwerk (20) aufweist, wobei die Zugvorrichtung (18) zur Aufnahme einer Betriebszugkraft (FZ) einer Zugmaschine in Fahrtrichtung (VR) und/oder zur Übertragung einer Betriebsstützlast (FS) der Arbeitsmaschine (10) auf die Zugmaschine konfiguriert ist, wobei das Fahrwerk (20) zumindest zwei Abstützeinrichtungen (22) aufweist, die zur Übertragung einer Betriebsradlast (FR) der Arbeitsmaschine (10) auf den Boden vorgesehen sind, wobei an der Rahmenkonstruktion (16) an der Heckseite, vorzugsweise in Fahrtrichtung (VR) hinter dem Fahrwerk (20), eine Kupplungseinrichtung (24) angeordnet ist, an welcher eine, einen Trägerrahmen (26) aufweisende Bodenbearbeitungs- und/oder Säeinrichtung (12; 14) aufgenommen ist, und einer an der Rückseite der Bodenbearbeitungs- und/oder Säeinrichtung (12; 14) angeordneten Stützradeinrichtung (40), wobei die Stützradeinrichtung (40) in aufrechter Richtung zwischen einer Bodenkontaktposition und einer nicht Bodenkontaktposition verschwenkbar am Trägerrahmen (26) gelagert ist, wobei das Verschwenken mittels einer, vorzugsweise mittels einer Steuereinrichtung steuer- und/oder regelbaren, Betätigungseinrichtung (54) erfolgt.

2. Arbeitsmaschine (10) nach Anspruch 1, **dadurch gekennzeichnet, dass** der Kupplungseinrichtung (24) eine, vorzugsweise mittels einer Steuereinrichtung steuer- und/oder regelbare, Aktoreinrichtung (50) zugeordnet ist, wobei die Aktoreinrichtung (50) zur Veränderung der Höhenlage und/oder der Winkellage der Bodenbearbeitungs- und/oder Säeinrichtung (12; 14) relativ zur Rahmenkonstruktion (16) konfiguriert ist.

3. Arbeitsmaschine (10) nach Anspruch 1, **dadurch gekennzeichnet, dass** die Betätigungseinrichtung (54) eingerichtet ist, in der Bodenkontaktposition eine Vorspannkraft auf die Stützradeinrichtung (40) auszuüben, vorzugsweise derartig, dass
- eine Entlastung der Kupplungseinrichtung (24) erfolgt und/oder
- eine Reduzierung der Betriebsradlast (FR) des Fahrwerks (20) erfolgt und/oder
- eine Erhöhung der Betriebsstützlast (FS) erfolgt.

4. Arbeitsmaschine (10) nach Anspruch 3, **dadurch gekennzeichnet, dass** die Steuereinrichtung durch ein Elektrohydraulisches-System gebildet ist und die Betätigungseinrichtung (54) durch zumindest einen hydraulisch betätigten Zylinder, der Bestandteil des Elektrohydraulischen-System ist, gebildet ist, wobei das Elektrohydraulische-System eine Begrenzungseinrichtung umfasst, die eingerichtet ist, die auf die Stützradeinrichtung (40) wirkende Vorspannkraft zu begrenzen.

5. Arbeitsmaschine (10) nach einem der vorhergehenden Ansprüche, **dadurch gekennzeichnet, dass** der Trägerrahmen (26) durch ein Mittelteil (28) und zwei gegenüber dem Mittelteil (28) um horizontale Längsachsen (30) mittels einer, vorzugsweise mittels einer Steuereinrichtung steuer-und/oder regelbaren, Stelleinrichtung (52) schwenkbare Seitenteile (32) gebildet ist, wobei insbesondere an den Seitenteilen (32) und/oder an dem Mittelteil (28) die Bodenbearbeitungs-und/oder Säeinrichtung (12; 14) gelagert ist.

6. Arbeitsmaschine (10) nach zumindest einem der Ansprüche 1 oder 5, **dadurch gekennzeichnet, dass** die Steuereinrichtung zur derartigen Steuerung und/oder Regelung der Betätigungseinrichtung (54) und/oder der Stelleinrichtung (52) eingerichtet ist,
- dass in der Arbeitsposition der Arbeitsmaschine (10), die Stützradeinrichtung (40) in eine nicht Bodenkontaktposition verschwenkt ist und die Seitenteile (32) in eine zumindest weitgehend waagerecht zum Mittelteil (28) verschwenkte Position verschwenkt sind und/oder
- dass in der Transportposition der Arbeitsmaschine (10), die Stützradeinrichtung (40) in eine Bodenkontaktposition verschwenkt ist und die Seitenteile (32) in eine zumindest weitgehend senkrecht zum Mittelteil (28) verschwenkte Position verschwenkt sind und/oder
- dass in der Arbeitsposition der Arbeitsmaschine (10), die Stützradeinrichtung (40) in eine Bodenkontaktposition verschwenkt ist und die Seitenteile (32) in eine zumindest weitgehend waagerecht zum Mittelteil (28) verschwenkte Position verschwenkt sind.

7. Arbeitsmaschine (10) nach Anspruch 6, **dadurch gekennzeichnet,**
- **dass** in der Arbeitsposition die Stützradeinrichtung (40) eine Lage oberhalb des Mittelteils (28), insbesondere oberhalb der Bodenbearbeitungs- und/oder Säeinrichtung (12; 14), aufweist, und/oder
- **dass** in der Transportposition die Stützradeinrichtung (40) in Bezug auf die Fahrtrichtung (VR) eine Lage hinter dem Mittelteil (28), insbesondere hinter der Bodenbearbeitungs- und/oder Säeinrichtung (12; 14) und/oder zwischen den senkrecht zum Mittelteil (28) verschwenkten Seitenteilen (32) aufweist.

8. Arbeitsmaschine (10) nach Anspruch 2, **dadurch gekennzeichnet, dass** die Kupplungseinrichtung (24) vorzugsweise als eine Dreipunktanhängung oder eine Vierpunktanhängung ausgebildet ist und/oder die Aktoreinrichtung (50) vorzugsweise gebildet ist durch zumindest
- einen, insbesondere hydraulisch mittels einer Steuereinrichtung betätigten, Oberlenkerzylinder und/oder
- einen, insbesondere hydraulisch mittels einer Steuereinrichtung betätigten, Unterlenkerzylinder.

9. Arbeitsmaschine (10) nach zumindest einem der Ansprüche 1 oder 2, **dadurch gekennzeichnet, dass** die Steuereinrichtung eingerichtet ist, die Betätigungseinrichtung (54) und die Aktoreinrichtung (50) in einer aufeinander abgestimmten Weise zu steuern und/oder zu regeln, vorzugsweise derartig, dass die Betriebsradlast (FR) des Fahrwerks (20) einen maximal zulässigen Wert nicht überschreitet und/oder dass die Betriebsstützlast (FS) einen minimal erforderlichen Wert nicht unterscheitet.

10. Arbeitsmaschine (10) nach zumindest einem der Ansprüche 1 oder 2, **dadurch gekennzeichnet, dass** der Betätigungseinrichtung (54) und/oder der Aktoreinrichtung (50) vorzugsweise in der Transportposition, Hubbegrenzungselemente zugeordnet sind.

11. Arbeitsmaschine (10) nach einem der vorhergehenden Ansprüche, **dadurch gekennzeichnet, dass** die Stützradeinrichtung (40) gebildet ist durch einen Schwenkrahmen (42) und eine Laufradeinrichtung (44), wobei die Laufradeinrichtung (44) durch ein Einzelrad oder eine Zwillingsradanordnung und/oder eine Tandemanordnung gebildet ist und/oder wobei die Laufradeinrichtung (44) vorzugsweise um eine aufrecht orientierte Achse schwenkbar am Schwenkrahmen (42) gelagert ist.

12. Arbeitsmaschine (10) nach einem der vorhergehenden Ansprüche, **dadurch gekennzeichnet, dass** der Rahmenkonstruktion (16) ein Vorratsbehälter (34) zugeordnet ist, der zum Mitführen und Bereitstellen von landwirtschaftlichem Verteilgut für die Säeinrichtung (12; 14) eingerichtet ist.

13. Verfahren zur Gewichtsverlagerung an einer gezogenen landwirtschaftlichen Arbeitsmaschine (10) zur Bodenbearbeitung und/oder zur Ausbringung von landwirtschaftlichem Verteilgut, mit einer Rahmenkonstruktion (16), welche an einer Frontseite eine Zugvorrichtung (18) und an einer Heckseite ein Fahrwerk (20) aufweist, wobei an der Rahmenkonstruktion (16) an der Heckseite, vorzugsweise in Fahrtrichtung (VR) hinter dem Fahrwerk (20), eine Kupplungseinrichtung (24) angeordnet ist, an welcher eine, einen Trägerrahmen (26) aufweisende, Bodenbearbeitungs- und/oder Säeinrichtung (12; 14) aufgenommen ist, umfassend,
- eine Aufnahme einer Betriebszugkraft (FZ) einer Zugmaschine in Fahrtrichtung (VR) und/oder eine Übertragung einer Betriebsstützlast (FS) der Arbeitsmaschine (10) auf die Zugmaschine mittels der Zugvorrichtung (18),
- eine Übertragung einer Betriebsradlast (FR) der Arbeitsmaschine (10) auf den Boden mittels zumindest zwei, das Fahrwerk (20) bildenden Abstützeinrichtungen (22), und
- eine Entlastung der Kupplungseinrichtung (24) und/oder eine Reduzierung der Betriebsradlast (FR) des Fahrwerks (20) und/oder eine Erhöhung der Betriebsstützlast (FS) der Zugvorrichtung (18) durch eine Erzeugung einer Vorspannkraft auf eine, an der Rückseite der Bodenbearbeitungs-und/oder Säeinrichtung (12; 14) angeordnete, Stützradeinrichtung (40) mittels einer Betätigungseinrichtung (54), wobei die Stützradeinrichtung (40) in aufrechter Richtung zwischen einer Bodenkontaktposition und einer nicht Bodenkontaktposition verschwenkbar am Trägerrahmen (26) gelagert ist, wobei das Verschwenken mittels einer, vorzugsweise mittels einer Steuereinrichtung steuer- und/oder regelbaren, Betätigungseinrichtung (54) erfolgt.

## Claims

1. Towed agricultural working machine (10) for soil cultivation and/or for discharging agricultural product for distribution, having a frame construction (16) which has a towing apparatus (18) on a front side and a chassis (20) on a rear side, wherein the towing apparatus (18) is configured to receive an operating towing force (FZ) of a traction machine in the direction of travel (VR) and/or to transmit an operating support load (FS) of the working machine (10) to the traction machine, wherein the chassis (20) has at least two support devices (22) which are provided for transmitting an operating wheel load (FR) of the working machine (10) to the ground, wherein a coupling device (24) is arranged on the frame construction (16) on the rear side, preferably behind the chassis (20) in the direction of travel (VR), on which coupling device a soil cultivation and/or sowing device (12; 14) having a carrier frame (26) is received, and having a support wheel device (40) arranged on the rear side of the soil cultivation and/or sowing device (12; 14), wherein the support wheel device (40) is mounted on the carrier frame (26) so as to be pivotable in an upright direction between a ground contact position and a non-ground contact position, wherein the pivoting is effected by means of an activating device (54), preferably open-loop and/or closed-loop controllable by means of a control device.

2. Working machine (10) according to Claim 1, **characterized in that** the coupling device (24) is assigned an actuator device (50) which can preferably be open-loop and/or closed-loop controlled by means of a control device, wherein the actuator device (50) is configured to change the height position and/or the angular position of the soil cultivation and/or sowing device (12; 14) relative to the frame construction (16).

3. Working machine (10) according to Claim 1, **characterized in that** the activating device (54) is configured to exert a prestressing force on the support wheel device (40) in the ground contact position, preferably in such a way that
- the coupling device (24) is relieved of load, and/or
- a reduction in the operating wheel load (FR) of the chassis (20) is carried out, and/or
- an increase in the operating support load (FS) is carried out.

4. Working machine (10) according to Claim 3, **characterized in that** the control device is formed by an electrohydraulic system, and the activating device (54) is formed by at least one hydraulically actuated cylinder which is a constituent part of the electrohydraulic system, wherein the electrohydraulic system comprises a limiting device which is configured to limit the prestressing force acting on the support wheel device (40).

5. Working machine (10) according to one of the preceding claims, **characterized in that** the carrier frame (26) is formed by a central part (28) and two side parts (32) which are pivotable relative to the central part (28) about horizontal longitudinal axes (30) by means of an actuating device (52) which is preferably open-loop and/or closed-loop controllable by means of a control device, wherein the soil cultivation and/or sowing device (12; 14) is mounted, in particular, on the side parts (32) and/or on the central part (28).

6. Working machine (10) according to at least one of Claims 1 or 5, **characterized in that** the control device is configured for such open-loop and/or closed-loop control of the activating device (54) and/or of the actuating device (52),
- **in that**, in the working position of the working machine (10), the support wheel device (40) is pivoted into a non-ground contact position, and the side parts (32) are pivoted into a position which is pivoted at least largely horizontally with respect to the central part (28), and/or
- **in that**, in the transport position of the working machine (10), the support wheel device (40) is pivoted into a ground contact position, and the side parts (32) are pivoted into a position which is pivoted at least largely perpendicularly with respect to the central part (28), and/or
- **in that**, in the working position of the working machine (10), the support wheel device (40) is pivoted into a ground contact position, and the side parts (32) are pivoted into a position which is pivoted at least largely horizontally with respect to the central part (28).

7. Working machine (10) according to Claim 6, **characterized**
- **in that**, in the working position, the support wheel device (40) has a position above the central part (28), in particular above the soil cultivation and/or sowing device (12; 14), and/or
- **in that**, in the transport position, the support wheel device (40) has, in relation to the direction of travel (VR), a position behind the central part (28), in particular behind the soil cultivation and/or sowing device (12; 14) and/or between the side parts (32) which are pivoted perpendicularly with respect to the central part (28).

8. Working machine (10) according to Claim 2, **characterized in that** the coupling device (24) is preferably designed as a three-point linkage or a four-point linkage and/or the actuator device (50) is preferably formed by at least
- an upper link cylinder, in particular hydraulically activated by means of a control device, and/or
- a lower link cylinder, in particular hydraulically activated by means of a control device.

9. Working machine (10) according to at least one of Claims 1 or 2, **characterized in that** the control device is configured to open-loop and/or closed-loop control the activating device (54) and the actuator device (50) in a manner matched to one another, preferably in such a way that the operating wheel load (FR) of the chassis (20) does not exceed a maximum permissible value and/or that the operating support load (FS) does not undershoot a minimum required value.

10. Working machine (10) according to at least one of Claims 1 or 2, **characterized in that** stroke limiting elements are assigned to the activating device (54) and/or to the actuator device (50), preferably in the transport position.

11. Working machine (10) according to one of the preceding claims, **characterized in that** the support wheel device (40) is formed by a pivoting frame (42) and a running wheel device (44), wherein the running wheel device (44) is formed by a single wheel or a twin wheel arrangement and/or a tandem arrangement, and/or wherein the running wheel device (44) is preferably mounted on the pivoting frame (42) so as to be pivotable about a vertically oriented axis.

12. Working machine (10) according to one of the preceding claims, **characterized in that** the frame construction (16) is assigned a storage container (34) which is configured to carry along and provide agricultural product for distribution for the sowing device (12; 14).

13. Method for shifting the weight on a towed agricultural working machine (10) for soil cultivation and/or for discharging agricultural product for distribution, having a frame construction (16) which has a towing apparatus (18) on a front side and a chassis (20) on a rear side, wherein a coupling device (24) is arranged on the frame construction (16) on the rear side, preferably behind the chassis (20) in the direction of travel (VR), on which coupling device a soil cultivation and/or sowing device (12; 14) having a carrier frame (26) is received, comprising
- receiving an operating towing force (FZ) of a traction machine in the direction of travel (VR) and/or transmitting an operating support load (FS) of the working machine (10) to the traction machine by means of the towing apparatus (18),
- transmitting an operating wheel load (FR) of the working machine (10) to the ground by means of at least two support devices (22) forming the chassis (20), and
- relieving the load of the coupling device (24) and/or reducing the operating wheel load (FR) of the chassis (20) and/or increasing the operating support load (FS) of the towing apparatus (18) by generating a preloading force by means of an activating device (54) on a support wheel device (40) arranged on the rear side of the soil cultivation and/or sowing device (12; 14), wherein the support wheel device (40) is mounted on the carrier frame (26) so as to be pivotable in an upright direction between a ground contact position and a non-ground contact position, wherein the pivoting is effected by means of an activating device (54), preferably open-loop and/or closed-loop controllable by means of a control device.

## Revendications

1. Machine de travail (10) agricole tractée pour le traitement du sol et/ou pour l'épandage d'un produit agricole à disperser, présentant une construction de cadre (16), qui présente sur une face frontale un dispositif de traction (18) et, à l'arrière, un châssis (20), le dispositif de traction (18) étant conçu pour recevoir une force de traction de fonctionnement (FZ) d'une machine de traction dans le sens de déplacement (VR) et/ou pour transférer une charge d'appui de fonctionnement (FS) de la machine de travail (10) à la machine de traction, le châssis (20) présentant au moins deux équipements d'appui (22), qui sont prévus pour le transfert d'une charge (FR) de roue de fonctionnement de la machine de travail (10) au sol, un dispositif d'accouplement (24) étant agencé sur la construction de cadre (16) à l'arrière, de préférence dans le sens de déplacement (VR) derrière le châssis (20), sur lequel dispositif d'accouplement est logé un équipement de traitement de sol et/ou de semis (12 ; 14) présentant un cadre support (26) et un équipement de roue d'appui (40) agencé sur la face arrière de l'équipement de traitement de sol et/ou de semis (12 ; 14), l'équipement de roue d'appui (40) étant logé sur le cadre support (26) de manière à pouvoir pivoter dans la direction verticale entre une position en contact avec le sol et une position non en contact avec le sol, le pivotement ayant lieu au moyen d'un équipement d'actionnement (54) pouvant être commandé et/ou régulé de préférence au moyen d'un équipement de commande.

2. Machine de travail (10) selon la revendication 1, **caractérisée en ce qu'**un équipement d'actionneur (50) pouvant être commandé et/ou régulé de préférence au moyen d'un équipement de commande est associé à l'équipement d'accouplement (24), l'équipement d'actionneur (50) étant conçu pour la modification de la position de hauteur et/ou de la position angulaire de l'équipement de traitement de sol et/ou de semis (12 ; 14) par rapport à la construction de cadre (16).

3. Machine de travail (10) selon la revendication 1, **caractérisée en ce que** l'équipement d'actionnement (54) est conçu pour exercer, dans la position en contact avec le sol, une force de précontrainte sur l'équipement de roue d'appui (40), de préférence de telle sorte que
- une allègement sur l'équipement d'accouplement (24) a lieu et/ou
- une réduction de la charge de roue de fonctionnement (FR) du châssis (20) a lieu et/ou
- une augmentation de la charge d'appui de fonctionnement (FS) a lieu.

4. Machine de travail (10) selon la revendication 3, **caractérisée en ce que** l'équipement de commande est formé par un système électro-hydraulique et l'équipement d'actionnement (54) est formé par au moins un vérin actionné de manière hydraulique, qui fait partie du système électro-hydraulique, le système électro-hydraulique comprenant un équipement de limitation qui est conçu pour limiter la force de précontrainte agissant sur l'équipement de roue d'appui (40).

5. Machine de travail (10) selon l'une des revendications précédentes, **caractérisée en ce que** le cadre support (26) est formé par une partie centrale (28) et deux parties latérales (32) pouvant pivoter par rapport à la partie centrale (28) autour d'axes longitudinaux horizontaux (30) au moyen d'un équipement de réglage (52), pouvant être commandé et/ou régulé de préférence au moyen d'un équipement de commande, l'équipement de traitement de sol et/ou de semis (12 ; 14) étant en particulier logé sur les parties latérales (32) et/ou sur la partie centrale (28).

6. Machine de travail (10) selon au moins l'une des revendications 1 ou 5, **caractérisée en ce que** l'équipement de commande est conçu pour une commande et/ou une régulation de l'équipement d'actionnement (54) et/ou de l'équipement de réglage (52) telle(s) que
- dans la position de travail de la machine de travail (10), l'équipement de roue d'appui (40) est pivoté dans une position non en contact avec le sol et les parties latérales (32) sont pivotées dans une position pivotée au moins largement horizontalement par rapport à la partie centrale (28) et/ou
- dans la position de transport de la machine de travail (10), l'équipement de roue d'appui (40) est pivoté dans une position en contact avec le sol et les parties latérales (32) sont pivotées dans une position pivotée au moins largement verticalement par rapport à la partie centrale (28) et/ou
- dans la position de travail de la machine de travail (10), l'équipement de roue d'appui (40) est pivoté dans une position en contact avec le sol et les parties latérales (32) sont pivotées dans une position pivotée au moins largement horizontalement par rapport à la partie centrale (28).

7. Machine de travail (10) selon la revendication 6, **caractérisée en ce que**
- dans la position de travail, l'équipement de roue d'appui (40) présente une position au-dessus de la partie centrale (28), en particulier au-dessus de l'équipement de traitement de sol et/ou de semis (12 ; 14) et/ou
- dans la position de transport, l'équipement de roue d'appui (40) présente, par rapport au sens de déplacement (VR), une position derrière la partie centrale (28), en particulier derrière l'équipement de traitement de sol et/ou de semis (12 ; 14) et/ou entre les parties latérales (32) pivotées verticalement par rapport à la partie centrale (28).

8. Machine de travail (10) selon la revendication 2, **caractérisée en ce que** l'équipement d'accouplement (24) est réalisé de préférence comme un attelage à trois points ou un attelage à quatre points et/ou l'équipement d'actionneur (50) est de préférence formé par au moins
- un vérin de bras supérieur en particulier actionné de manière hydraulique au moyen d'un équipement de commande et/ou
- un vérin de bras inférieur en particulier actionné de manière hydraulique au moyen d'un équipement de commande.

9. Machine de travail (10) selon au moins l'une des revendications 1 ou 2, **caractérisée en ce que** l'équipement de commande est conçu pour commander et/ou réguler l'équipement d'actionnement (54) et l'équipement d'actionneur (50) d'une manière adaptée l'un à l'autre, de préférence de telle sorte que la charge de roue de fonctionnement (FR) du châssis (20) ne passe pas au-dessus d'une valeur maximale admissible et/ou que la charge d'appui de fonctionnement (FS) ne passe pas sous une valeur minimale nécessaire.

10. Machine de travail (10) selon au moins l'une des revendications 1 ou 2, **caractérisée en ce que** des éléments de limitation de course, de préférence dans la position de transport, sont associés à l'équipement d'actionnement (54) et/ou à l'équipement d'actionneur (50).

11. Machine de travail (10) selon l'une des revendications précédentes, **caractérisée en ce que** l'équipement de roue d'appui (40) est formé par un cadre pivotant (42) et un équipement de roue (44), l'équipement de roue (44) étant formé par une roue unique ou par un agencement de roues jumelles et/ou par un agencement en tandem et/ou l'équipement de roue (44) étant logé de manière pivotante, de préférence autour d'un axe orienté verticalement, sur le cadre pivotant (42).

12. Machine de travail (10) selon l'une des revendications précédentes, **caractérisée en ce qu'**un réservoir (34) est associé à la construction de cadre (16), lequel réservoir est conçu pour le transport et la mise à disposition d'un produit agricole à disperser pour l'équipement de semis (12 ; 14).

13. Procédé de rééquilibrage du poids sur une machine de travail (10) agricole tractée pour le traitement du sol et/ou l'épandage d'un produit agricole à disperser, présentant une construction de cadre (16), qui présente sur une face frontale un dispositif de traction (18) et, à l'arrière, un châssis (20), un dispositif d'accouplement (24) étant agencé sur la construction de cadre (16) à l'arrière, de préférence dans le sens de déplacement (VR) derrière le châssis (20), sur lequel est logé un équipement de traitement de sol et/ou de semis (12 ; 14) présentant un cadre support (26), comprenant
- une reprise d'une force de traction de fonctionnement (FZ) d'une machine de traction dans le sens de déplacement (VR) et/ou un transfert d'une charge d'appui de fonctionnement (FS) de la machine de travail (10) à la machine de traction au moyen du dispositif de traction (18),
- un transfert d'une charge de roue de fonctionnement (FR) de la machine de travail (10) au sol au moyen d'au moins deux équipements d'appui (22) formant le châssis (20) et
- un allègement sur l'équipement d'accouplement (24) et/ou une réduction de la charge de roue de fonctionnement (FR) du châssis (20) et/ou une augmentation de la charge d'appui de fonctionnement (FS) du dispositif de traction (18) par la génération d'une force de précontrainte sur un équipement de roue d'appui (40) agencé sur le côté arrière de l'équipement de traitement de sol et/ou de semis (12 ; 14) au moyen d'un équipement d'actionnement (54), l'équipement de roue d'appui (40) étant logé sur le cadre support (26) de manière à pouvoir pivoter dans la direction verticale entre une position en contact avec le sol et une position non en contact avec le sol, le pivotement ayant lieu au moyen d'un équipement d'actionnement (54) pouvant être commandé et/ou régulé de préférence au moyen d'un équipement de commande.
